(19) **Europäisches Patentamt / European Patent Office / Office européen des brevets**

(11) **EP 1 514 968 B1**

(12) **EUROPEAN PATENT SPECIFICATION**

(45) Date of publication and mention
of the grant of the patent:
**17.12.2008 Bulletin 2008/51**

(51) Int Cl.:
*D06N 3/14* (2006.01)          *C08G 18/10* (2006.01)
*C08G 18/42* (2006.01)          *C08G 18/48* (2006.01)
*C08G 18/66* (2006.01)          *C09D 175/04* (2006.01)
*D06M 15/576* (2006.01)

(21) Application number: **03760912.0**

(22) Date of filing: **19.06.2003**

(86) International application number:
**PCT/JP2003/007809**

(87) International publication number:
**WO 2004/001122 (31.12.2003 Gazette 2004/01)**

(54) **LEATHERY SHEET OBJECT AND PROCESS FOR PRODUCING THE SAME**

LEDERARTIGES FLÄCHENGEBILDE UND VERFAHREN ZU DESSEN HERSTELLUNG

OBJET PLAN TANNE ET SON PROCEDE DE PRODUCTION,

(84) Designated Contracting States:
**DE FR GB IT**

(30) Priority: **20.06.2002 JP 2002179772**

(43) Date of publication of application:
**16.03.2005 Bulletin 2005/11**

(73) Proprietor: **Teijin Cordley Limited**
**Ooda-shi**
**Shimane 694-0041 (JP)**

(72) Inventors:
• **MIMURA, Masahisa,**
**c/o Teijin Cordley Limited**
**Ooda-shi, Shimane 694-0041 (JP)**

• **ISHIKAWA, Shinji,**
**c/o Teijin Cordley Limited**
**Ooda-shi, Shimane 694-0041 (JP)**

(74) Representative: **Hallybone, Huw George et al**
**Carpmaels & Ransford**
**43-45 Bloomsbury Square**
**London WC1A 2RA (GB)**

(56) References cited:
JP-A- 1 260 072          JP-A- 6 158 555
JP-A- 7 305 280          JP-A- 10 226 970
JP-A- 60 239 573         JP-A- 60 252 780
JP-A- 63 012 769         JP-A- 63 085 185
JP-A- 2000 248 472       US-A- 4 792 354
US-A1- 2002 041 965

EP 1 514 968 B1

**Description**

Detailed Description of the Invention

Field of the Invention

The present invention relates to a leather-like sheet material having high water repellency, a process for the production thereof, a fluorine-containing side-chain-modified urethane compound to be used therefor and a process for the production thereof.

Prior Art

Conventionally, natural leather has been long used as a leather-like sheet material for shoes, clothes, bags and sporting goods. However, natural leather has had a defect that it has low water resistance and absorbs water when used in the rain. Further, there is another problem that once it gets wet and absorbs water, the feel thereof deteriorates even if it is dried. In recent years, artificial leather has come to be used as a substitute for natural leather.

However, artificial leather has not yet been satisfactory with respect to water resistance although its feel is not deteriorated when it once comes to be in a wet state and then dried. For example, it is known that a water repellent having a long-chain alkyl group, a water repellent having silicon or a water repellent having a perfluoroalkyl is used to treat the surface of leather. When such a water repellent is used for artificial leather, the artificial leather can be improved in water repellency and water resistance of a front surface or a reverse surface thereof. However, the problem is that the water resistance and water repellency are not sufficient in a cross section when the leather is cut or in a seam when it is machine-sewed, so that the leather absorbs water during use to increase in weight.

As a method of imparting a cut cross section with water repellency, JP-A-60-239573 and JP-A-60-252780 disclose a method of producing a leather-like sheet material such as artificial leather, in which a fluorine-containing urethane compound as a water repellent is added to a high-molecular weight elastomeric polymer solution, a fibrous base material is impregnated with the solution and the polymer solution is coagulated.

The fluorine-containing urethane compound disclosed in the above Japanese Laid-open Patent Publications is an addition reaction product from a urethane prepolymer having a terminal containing an isocyanate group and a perfluoroalkyl-group-containing compound having an active hydrogen group. However, the above perfluoroalkyl-group-containing compound is a compound having a sulfoneamide group represented by $-SO_2NH_2$ or $-SO_2-N(R)-CH_2CH_2$ $(OCH_2CH_2)_n(OH)$ (wherein R is an alkyl group having 1 to 3 carbon atoms and n is 0 or a positive integer of 1 to 20) which sulfoneamide group is bonded to a terminal of a perfluoroalkyl group having 6 to 12 carbon atoms. It has been recently pointed out that such a perfluoroalkyl compound containing a sulfoneamide group may be an endocrine disturbing chemical having a risk of accumulation inside human bodies.

It has been already found that when a compound having a group of -OH or $-OCH_2CH_2OH$, et al in place of the sulfoneamide group bonding to the terminal of the perfluoroalkyl group is used as a water repellent, it is not sufficient against water absorption in a cross section, and particularly that its effect sharply decreases with the passage of time.

US-A-4,792,354 describes a water and oil repellent that supposedly has excellent desoiling properties. The water and oil repellent is composed of a compound comprising at least two terminal segments and an intermediate segment connecting the terminal segments and having a molecular weight of from 800 to 20,000, each terminal segment containing at least one polyfluoroalkyl group connected by a -CONH- linking group, said intermediate segment being a urethane oligomer containing at least two -CONH-linking groups and a hydrophilic molecular chain, and said terminal segments and intermediate segment being connected by a -CONH- linking group.

US 2002/041965 describes an artificial leather that has a base sheet and a resin layer arranged on at least one side of the base sheet. The resin layer comprises a polyurethane having side chains derived from a specified fluorine-containing diol.

JP 07 305280 describes a synthetic leather comprising a polyurethane porous layer consisting of a fluorine-containing urethane resin and a urethane resin laminated to the surface of a fiber base to which a fluorine-based surfactant is stuck and the surface of the porous layer is ground. The back of the fiber base is coated with a water-in-oil type urethane resin suspension and a urethane-based porous coating film is formed to give the synthetic leather that is supposedly water-repellent, waterproof and water vapor permeable.

Problems to be Solved by the Invention

It is a first object of the present invention to provide a leather-like sheet material that is excellent in water repellency in a cut cross section and water resistance and which exhibits less decrease in water repellency and water resistance with the passage of time and a process for the production thereof.

It is a second object of the present invention to provide a fluorine-containing side-chain-modified urethane compound that can be used in the production of the above leather-like sheet material of the present invention and a process for the preparation thereof.

It is a third object of the present invention to provide various goods formed from the above leather-like sheet material.

Means to Solve the Problems

According to studies made by the present inventors, it has been found that the above objects of the present invention can be achieved by the following (I) to (IV).

(I) A leather-like sheet material comprising a sheet material composed of a fiber aggregate and polyurethane resin, the sheet material containing a fluorine-containing side-chain-modified urethane compound which satisfies the following requirements (i) to (iii),

(i) said urethane compound containing a urethane-bond-containing compound having a molecular weight of 500 to 5,000 and fluorine-containing side chains having a molecular weight of 200 to 1,000 each, 3 to 12 such fluorine-containing side chains bonding to the urethane-bond-containing compound,
(ii) said urethane compound having a fluorine content of 20 to 60 % by weight as a fluorine atom, and
(iii) said urethane compound having 6 to 36 urethane bonds per molecule,
(iv) said methane compound being dispersed in the polyurethane resin.

(II) A process for the production of a leather-like sheet material, which comprises impregnating and/or coating a fiber aggregate with a treatment solution containing the fluorine-containing side-chain-modified urethane compound and the elastic polymer recited in the above (I) and coagulating the elastic polymer.

(III) A fluorine-containing side-chain-modified urethane compound containing a urethane-bond-containing compound having a molecular weight of 500 to 5,000 and fluorine-containing side chains having a molecular weight of 200 to 1,000 each, 3 to 12 such fluorine-containing side chains bonding to the urethane-bond-containing compound, said urethane compound having a fluorine content of 20 to 60 % by weight as a fluorine atom and having 6 to 36 urethane bonds per molecule.

(IV) A process for the preparation of a fluorine-containing side-chain-modified urethane compound, which comprises reacting a polyol compound having a molecular weight of 300 to 3,000 with a polyisocyanate compound under conditions where $(m + n) \geqq 5$ is satisfied, in which m is a number of functional groups (number of -OH groups) per molecule of said polyol compound and n is a number of functional groups (number of -NCO groups) per molecule of said polyisocyanate compound, and where the total number of MCO groups is greater the total number of OH groups, and reacting the thus-obtained urethane-bond-containing compound with a fluorine-containing-side-chain-providing compound of the following formula (1),

$$R_f - R_1 - Q \qquad (1)$$

wherein:

$R_f$ is a fluorine-containing side chain group,
$R_1$ is an alkylene or oxyalkylene group having 1 to 12 carbon atoms, and
Q is a hydroxyl group, a carboxyl group or an amino group.

The present invention will be explained further in detail below. First, the fluorine-containing side-chain-modified urethane compound in the above (III) and the process for the preparation thereof in the above (IV) will be explained, and then, the leather-like sheet material in the above (I) and the process for the production thereof in the above (II) will be explained.

The fluorine-containing side-chain-modified urethane compound for use in the leather-like sheet material of the present invention is a compound that satisfies the following requirements (i) to (iii)

(i) The above urethane compound contains a urethane-bond-containing compound having a molecular weight of 500 to 5,000 and fluorine-containing side chains having a molecular weight of 200 to 1,000 each, 3 to 12 such fluorine-containing side chains bonding to the urethane-bond-containing compound.
(ii) The above urethane compound has a fluorine content of 20 to 60 % by weight as a fluorine atom.
(iii) The above urethane compound has 6 to 36 urethane bonds per molecule.

The compound that satisfies the above requirements (i) to (iii) (to be called "modified urethane compound" for short hereinafter) effectively works as a water repellent when incorporated into a leather-like sheet material, and it serves to improve a cut cross section of the sheet material in water repellency and water resistance.

The modified urethane compound satisfying the above requirements (i) to (iii), provided by the present invention, is a urethane compound having fluorine-containing side chains having a molecular weight of 200 to 1,000 each and being bonded thereto. That is, it is a modified urethane compound in which 3 to 12, preferably 4 to 6 fluorine-containing side chains bond to a urethane-bond-containing compound having a molecular weight of 500 to 5,000, preferably 600 to 4,000, most preferably 700 to 3,000.

When the molecular weight of the urethane-bond-containing compound is smaller than 500, undesirably, the amount of the urethane-bond-containing compound that precipitates from an elastic polymer of the leather-like sheet material increases. That is, when the urethane-bond-containing compound having a molecular weight smaller than 500 is incorporated into the elastic polymer (e.g., polyurethane) to produce an artificial leather, the amount of the compound that bleeds from the leather increases, so that the water repellency of the leather is degraded. When the amount of the modified urethane compound (water repellent) is increased for preventing a decrease in water repellency, the feel of the leather-like sheet material is degraded. When the molecular weight of the urethane-bond-containing compound exceeds 5,000, the fluorine content in the modified urethane compound tends to decrease relatively, and the water repellency and water resistance effect on the leather-like sheet material is insufficient.

In the modified urethane compound of the present invention, the number of the bonding fluorine-containing side chains is required to be 3 or more, and it is 12 or less, preferably 6 or less. When the above number of the bonding fluorine-containing side chains is 1 or 2, the number is small and the water-repellency effect is small. Further, the regular coordination of the fluorine-containing side chains increases, and when a polyurethane resin is used as a elastic polymer, the effective coating degree on the resin surface by the fluorine-containing side chains decreases. The molecular weight of the above fluorine-containing side chains is 200 to 1, 000, preferably 210 to 920. When the above molecular weight is lower than 200, the coating degree by the fluorine-containing side chains is small, so that the water-repellency effect is small. When it is greater than 1,000, the water-repellency effect is excellent, but the solubility of the modified urethane compound in a solvent decreases, so that handling of the modified urethane compound is difficult. Further, undesirably, the productivity of the sheet materials decreases. The concentration of the fluorine content, as a fluorine atom, in the molecule of the modified urethane compound is required to be in the range of 20 to 60 % by weight. It is most preferably in the range of 35 to 45 % by weight.

Further, the above fluorine-containing side chains are preferably perfluoroalkyl groups having 4 to 18 carbon atoms each. The perfluoroalkyl groups are represented by $-C_nF_{2n+1}$, and the number n of carbon atoms is preferably 4 to 18, more preferably 6 to 12.

The modified urethane compound (water repellent) of the present invention is required to have 6 to 36 urethane bonds per molecule, and, preferably, with an increase in the molecular weight, the number of the urethane bonds is increased. The number of the urethane bonds represented by -NHCOO- when the modified urethane compound has a molecular weight of 1,000 is preferably in the range of 1 to 5, more preferably in the range of 1.5 to 4. The urethane bonds in the modified urethane compound (water repellent) of the present invention improve the coordination effect with the elastic polymer (e.g., polyurethane resin), and when the modified urethane compound is added to the elastic polymer, the urethane bonds have an effect that the bleeding of the modified urethane compound is suppressed. When the number of the urethane bonds in the modified urethane compound is smaller than the above range, the above effect decreases. When it is greater to the contrary, the solubility of the modified urethane compound in a solvent decreases, and it is observed that the modified urethane compound tends to be crystallized. Further, when the modified urethane compound is added to the elastic polymer (e.g., polyurethane resin), the water repellency and the water resistance tend to decrease due to a change with the passage of time.

Further, the modified urethane compound of the present invention is preferably water-dispersible, and in this case, a treatment solution containing the modified urethane compound as a main component can be used as such. In this case, preferably, the urethane-bond-containing compound of the fluorine-containing side-chain-modified urethane compound contains a segment of polyoxyethylene, above all, polyethylene glycol. The segment preferably has a molecular weight of 220 or more, and the upper limit of the molecular weight is approximately 2,500. The molecular weight of the segment is more preferably 250 to 2,100. Further, the content of the polyoxyethylene segment in the organic group is 20 % by weight or more, and further, it is preferably in the range of 20 to 60 % by weight. The above water-dispersible modified urethane compound of the present invention can be used after the leather-like sheet material is produced, so that its application field as a water repellent is broad.

Further, in the modified urethane compound of the present invention, preferably, the compound forming the molecule thereof contains no sulfur (S), and the molecule is substantially composed of atoms including C, H, N, O and F.

Further, the modified urethane compound (water repellent) of the present invention as a whole preferably has a molecular weight in the range of 1,000 to 10,000, particularly preferably has a molecular weight in the range of 2,500 to 7,500. The modified urethane compound having a molecular weight in the above range is preferred since it prevents the bleeding from the elastic polymer.

The above modified urethane compound of the present invention can be prepared by the following method. That is, the modified urethane compound can be prepared by a method in which a polyol compound having a molecular weight of 300 to 3,000 and a polyisocyanate compound are reacted under conditions where $(m + n) \geqq 5$ is satisfied in which m is a number of functional groups (-OH groups) per molecule of the above polyol compound and n is a number of functional groups (-NCO groups) per molecule of the above polyisocyanate compound, and where the total of NCO groups comes to be greater than the total of OH groups, and the thus-obtained urethane-bond-containing compound is reacted with a fluorine-containing-side-chain-providing compound of the following formula (1),

$$R_f - R_1 - Q \qquad (1)$$

wherein:

$R_f$ is a fluorine-containing side chain group,
$R_1$ is an alkylene or oxyalkylene group having 1 to 12 carbon atoms, and
Q is a hydroxyl group, a carboxyl group or an amino group.

The polyol for use in the preparation of the modified urethane compound is a polyol in which the number of functional groups (number of -OH groups: m) is preferably 4 or less, most preferably 2 or 3, and it is a diol, triol or tetraol whose molecular weight is 300 or more but 3,000 or less, preferably 1,000 or less, still more preferably 350 to 600. The polyol may be a single compound from these or may be a mixture of these. More specifically, the above polyol includes polyethylene adipate, polypropylene adipate, polydiethylene adipate, polydiethylene-neopentyl adipate, polycaprolactone, those obtained by initiating reactions of polyester diols of these in the presence of trimethylolpropane, glycerin, sorbitan or the like, and polypropylene triol and polytetramethylene polyol obtained by using polypropylene glycol, polytetramethylene glycol, trimethylolpropane, sorbitan or the like as a reaction initiator.

Of these polyols, branched polyols are preferred for suppressing the crystallization of the modified urethane compound and improving the degree of water repellency when each of them is added in a small amount. More specifically, neopentyl glycol, diethylene glycol or trihydric polyol, which causes the crystallization less easily than an aliphatic linear diol or dicarboxylic acid which easily causes the crystallization is preferably used in combination with a dihydric polyol.

The polyisocyanate for use in the preparation of the modified urethane compound is a polyisocyanate in which the number (n) of functional groups thereof is 2 or more, and it is preferably a polyisocyanate in which n is 4 or less, most preferably a polyisocyanate in which n is 2 or 3 or a mixture of polyisocyanates in which n is 2 and 3. The molecular weight of the above polyisocyanate is preferably 100 or more but 1,000 or less. More specifically, the polyisocyanate includes difunctional isocyanates such as tolylene diisocyanate, hexamethylene diisocyanate, isophorone diisocyanate and diphenylmethane diisocyanate, and polyfunctional isocyanates having terminal isocyanate groups, obtained by reacting these difunctional isocyanates with a polyhydric alcohol such as trimethylolpropane, glycerin or sorbitan under a condition of excess isocyanate.

More preferably, the polyisocyanate is selected from trifunctional or higher-functional polyisocyanates. Such polyisocyanates can increase the density of the fluorine-containing side chains in the modified urethane compound (perfluoroalkyl grorp), so that the water repellency effect can be improved. Further, when a trifunctional isocyanate is used, the number of urethane bonds per modified urethane compound can be increased, and the bleeding from the elastic polymer can be prevented. Further, the crystallizability of the modified urethane compound is decreased, and the modified urethane compound can be coordinated on the surface of the elastic polymer of the sheet material.

Further, desirably, the urethane-bond-containing compound obtained by reacting the polyol compound with the polyisocyanate compound has a terminal containing 3 or more isocyanate groups, so that each m and n are required to be an integer of 2 or more and satisfy $(m + n) \geqq 5$. More preferably, the total sum of m and n is 5 or 6.

In the present invention, further, when the polyol compound and the polyisocyanate compound are reacted, these compounds to be reacted are required to have an amount ratio in which the total number of NCO groups is greater than the total number of OH groups. The amount ratio of the polyol compound and the polyisocyanate compound is adjusted as described above for the reaction, whereby the reaction is carried out such that the thus-obtained urethane-bond-containing compound has isocyanate-group terminals.

Further, when the above reaction is carried out, advantageously, the ratio of molar amount of the polyisocyanate/ molar amount of the polyol compound (molar amount of the polyol compound x number of hydroxyl groups per molecule of the polyol compound) is in the range of 0.9 to 1.1.

The above polyol compound and the polyisocyanate compound are reacted to obtain the urethane-bond-containing compound, and then the urethane-bond-containing compound is reacted with the fluorine-containing-side-chains-providing compound, to give the modified urethane compound. The thus-obtained modified urethane compound can satisfy the conditions that the modified urethane compound can have affinity to the elastic polymer to which the modified urethane compound is to be added as a water repellent, that the crystallizability of the modified urethane compound itself is to be small, that the modified urethane compound can be coordinated on the surface of the elastic polymer used and that the number of the fluorine-containing side chains per molecule of the modified urethane compound (density of fluorine-containing side chains per molecule) is to be proper. And, the obtained modified urethane compound does not bleed from the elastic polymer, particularly, the urethane resin, to which the modified urethane compound has been added as a water repellent, and even when added in a small amount, the modified urethane compound produces an excellent effect on prevention of absorption in a cross section and an excellent water-repellency effect.

The process for the preparation of the fluorine-containing side-chain-modified urethane compound for use as a water repellent in the present invention is not limited so long as a compound having the above chemical and structural features can be prepared. In one embodiment of the above preparation process, the above modified urethane compound can be prepared by reacting a polyol compound having a molecular weight of 300 to 3,000 with a polyisocyanate compound under conditions where $(m + n) \geqq 5$ is satisfied, in which m is a number of functional groups (number of -OH groups) per molecule of said polyol compound and n is a number of functional groups (number of -NCO groups) per molecule of said polyisocyanate compound, and where the total number of NCO groups is greater the total number of OH groups, and reacting the thus-obtained urethane-bond-containing compound with a fluorine-containing-side-chain-providing compound of the following formula (1),

$$R_f - R_1 - Q \qquad (1)$$

wherein:

R_f is a fluorine-containing side chain group,
$R_1$ is an alkylene or oxyalkylene group having 1 to 12 carbon atoms, and
Q is a hydroxyl group, a carboxyl group or an amino group.

According to the above process, the urethane-bond-containing compound obtained by reacting the polyol compound with the polyisocyanate compound has an isocyanate group (-NCO group). The isocyanate group is reacted with the fluorine-containing-side-chain-providing compound of the above formula (1), whereby the isocyanate group and the group represented by Q bond to each other and the modified urethane compound is obtained.

In the above formula (1), $R_f$ as a fluorine-containing side chain group is preferably a perfluoroalkyl group having 4 to 18 carbon atoms. The perfluoroalkyl group is represented by $C_nF_{2n+1}$, and the number n of carbon atoms is preferably 4 to 18, and it is particularly preferably 6 to 12 since the modified urethane compound has an excellent effect on the prevention of water absorption in a cross section. When the number n of carbon atoms exceeds 18, the fluorine content increases, but the effect on the prevention of water absorption tends to be nearly saturated. $R_1$ is an alkylene or oxyalkylene group having 1 to 12 carbon atoms, preferably 2 to 6 carbon atoms, and it is most preferably an alkylene group having 2 to 4 carbon atoms. Q is can be one of a hydroxyl group, a carboxyl group and an amino group so long as such a group can react with the isocyanate group. When it is taken into account that the modified urethane compound finally obtained is not easily crystallized, Q is preferably a hydroxyl group.

In the above process for the preparation of the modified urethane compound, first, the amount ratio of the polyol compound and the isocyanate compound is adjusted so that the urethane-bond-containing compound (intermediate) to be formed has an isocyanate group terminal, and the polyol compound and the isocyanate compound are reacted, and then the fluorine-containing-side-chain-providing compound of the above formula (1) is reacted with the intermediate in a manner in which the fluorine-containing-side-chain-providing compound is more or less equivalent to the equivalent weight of isocyanate groups of the intermediate, whereby there can be obtained the modified urethane compound having terminals to which the fluorine-containing side chains are added.

More specifically, for example, a preferred process is as follows. A polyol compound having a molecular weight of 400 is used as a polyol compound, and an adduct of 1 mol of trimethylolpropane with 3 mol of tolylene diisocyanate is used as an isocyanate compound. In the reaction for forming the intermediate (prepolymer), the polyol compound: isocyanate compound molar ratio is adjusted to approximately 1:2, and in the reaction between the prepolymer and the fluorine-containing-side-chain-providing compound, the prepolymer:fluorine-containing-side-chain-providing compound $(C_nF_{2n+1}CH_2CH_2OH)$ molar ratio is adjusted to approximately 1:4. In this case, the number n of carbon atoms is preferably 4 to 18, and further, it is most preferably 6 to 12. Further, the fluorine content, as fluorine atoms, in the thus-obtained modified urethane compound is preferably in the range of 20 to 60 % by weight, more preferably 30 to 48 % by weight, still more preferably 35 to 45 % by weight. However, the process for synthesizing the modified urethane compound of the present invention shall not be limited to the above process.

When the water-dispersible water-repellent containing a polyoxyethylene segment in the polyol is prepared, the reaction is once carried out in an organic solvent such as acetone, then, a dispersion of the reaction product in water is prepared while stirring with a homogenizer, and then the organic solvent is removed by distillation, whereby the water-dispersible water-repellent can be formed. In this case, the molecular weight of the segment is preferably 220 or more, and the upper limit of the molecular weight is approximately 2,500. The molecular weight of the segment is most preferably 250 to 2,100. Concerning the content of the segment, the content of the segment formed of polyoxyethylene in the polyol is 40 % by weight or more, preferably 50 % by weight or more, more preferably 65 to 100 % by weight.

The process for the production of the leather-like sheet material of the present invention will be explained below.

The leather-like sheet material that is the present invention is a leather-like sheet material in which the sheet material mainly formed of a fiber aggregate and a elastic polymer contains the above modified urethane compound of the present invention as a water repellent. Preferably, the sheet material is a leather-like sheet material in which spaces in the fiber aggregate such as a non-woven fabric are filled with the elastic polymer a polyurethane resin).

In the leather-like sheet material of the present invention, the above fluorine-containing side-chain-modified urethane compound of the present invention is present in a manner in which the fluorine-containing side-chain-modified urethane compound is mixed with, and dispersed in, the polyurethane resin.

In another preferred embodiment, the above fluorine-containing side-chain-modified urethane compound of the present invention is present in a manner in which the fluorine-containing side-chain-modified urethane compound adheres to the elastic polymer surface. Particularly, when the modified urethane compound is applied to the leather-like sheet material formed of a superfine fiber and the elastic polymer obtained by dissolving a "sea" component from a sheet material formed of a "sea-islands" fiber and the elastic polymer by a solvent extraction method, preferably, the modified urethane compound is prepared as a water-dispersible water repellent, and allowed to adhere to the elastic polymer surface after the leather-like sheet material is formed.

In the leather-like sheet material of the present invention, not only the surface but also the cross section thereof does not absorb water, and it is a leather-like sheet material having high durability with respect to water absorption and water repellency. Further, the leather-like sheet material of the present invention preferably has an after-4-week cross-section water absorptivity of 40 mm/24 hours or less. The after-4-week cross-section water absorptivity is more preferably 20 mm/24 hours or less, most preferably 5 mm/24 hours or less. In this case, further, while the above cross-section water absorptivity is satisfied, the flexural hardness is preferably 4 g/cm or less, more preferably 2 g/cm or less. Further, the leather-like sheet material of the present invention preferably has a thickness in the range of 0.5 to 2 mm.

More specifically, the fiber aggregate to be used for the leather-like sheet material of the present invention is a base material that internally has space portions, such as a non-woven fabric, a woven fabric and a knitted cloth. The fiber composition for constituting these can be selected from a synthetic fiber, a regenerated fiber or a natural fiber. For obtaining the leather-like sheet material improved in cross-section water absorptivity and water repellency, which is an object of the present invention, the fiber preferably includes hydrophobic fibers such as polyethylene terephthalate, polypropylene terephthalate, polybutylene terephthalate and polypropylene fibers. The above hydrophobic fiber that is particularly preferred is defined to be a fiber that exhibits an equilibrium moisture regain of 1 % by weight or less at a temperature of 20°C and at a relative humidity of 60 %. However, a hydrophobic fiber such as polyamide or rayon can be also use. In this case, preferably, such a fiber is treated with a water repellent, etc., beforehand to suppress its water absorptivity before use.

Further, in the leather-like sheet material of the present invention, preferably, the fiber constituting the fiber aggregate is a fiber having a silicon compound adhering to its surface. The above silicon compound is mainly a reaction product of an alkyl- and/or allyl-hydrogen polysiloxane. When the fiber is surface-coated with the above silicon compound, the sheet-like material has excellent flexibility. The amount of the adhering silicone compound based on the fiber is 0.1 to 5 % by weight, preferably 0.2 to 2 % by weight.

The elastic polymer used together with the fiber aggregate is a polyurethane resin. The polyurethane resin includes polyurethane-based elastomers such as polyurethane elastomer, polyurethaneurea elastomer and polyurea elastomer. More specifically, the polyurethane resin includes elastomers obtained by reacting a polyester polyol such as polyethylene adipate, polybutylene adipate, etc.; a polyether polyol such as polyethylene glycol, polypropylene glycol, polytetramethylene glycol, etc.; or polyol such as a polycarbonate polyol exemplified by polyhexamethylene carbonate and an organic diisocyanate such as tolylene diisocyanate, 4,4'-diphenylmethane diisocyanate, etc., with a low-molecular chain extender such as ethylene glycol or tetramethylene glycol. Further, the polyurethane resin is preferably finely porous. Further, other elastic polymer may be used in combination with the polyurethane resin.

The content of the modified urethane compound in the leather-like sheet material of the present invention can be determined depending upon the cross-section water absorptivity and water repellency required in the field of use. The above content represented by the content of the modified urethane compound based on the elastic polymer is 0.1 to 4 % by weight, preferably 0.2 to 3 % by weight. However, the above range and preferred range differ depending upon the field of use. For example, in the field of golfer shoes required to have cross-section water absorptivity and water repellency at a highest level, the above content is preferably 0.8 to 4.0 % by weight, more preferably 1.0 to 3.0 % by weight. In the fields of general shoes, women's shoes, casual shoes and clothes, the content of the modified urethane compound based on the elastic polymer is preferably 0.1 to 2.0 % by weight, more preferably 0.2 to 1.5 % by weight. When the above content is less than the above lower limit value, the modified urethane compound tends to fail to satisfy the cross-section water absorptivity and water repellency. When it exceeds the above upper limit value, it is likely to increase a cost and cause a trouble such as bleeding of the additive.

The process for the production of a leather-like sheet material, provided by the present invention, is a process of impregnating and/or coating the fiber aggregate with a treatment solution containing the modified urethane compound (water repellent) of the present invention and the elastic polymer and then coagulating elastic polymer. Preferably, the method of coagulation is a wet-coagulation method.

In the process for the production of a leather-like sheet material, provided by the present invention, preferably, the fiber constituting the fiber aggregate has a silicon compound adhering to the fiber surface beforehand. The silicon compound is mainly a reaction product of an alkyl-and/or allyl-hydrogen polysiloxane. More specifically, there is employed a method in which the fiber aggregate is treated with a solvent solution or aqueous dispersion prepared by adding a catalyst such as an organic acid zinc or organic acid tin to methylhydrogen polysiloxane or phenylhydrogen polysiloxane, followed by heat treatment. The fiber surface is coated with the silicon compound beforehand, so that the elastic polymer is coagulated in space portions in a state where the space portions are formed between the fiber and the elastic polymer while the elastic polymer does not directly bond to the fiber in the fiber aggregate. As a result the sheet material is excellent in flexibility. This effect is remarkably produced when a hydrophobic fiber is used. The amount of the adhering silicon compound based on the fiber is 0.1 to 5 % by weight, and further it is preferably 0.2 to 2 % by weight.

The treatment solution with which the fiber aggregate is to be impregnated or coated can be selected, for example, from a solution of dimethylformamide, dimethylacetamide, dimethylsulfoxide or tetrahydrofuran that is a solvent for the elastic polymer, or a solution or dispersion prepared by adding a proper amount of other poor solvent thereto.

The amount of the modified urethane compound for use in the present invention, which is to be added to the elastic polymer, can be determined depending upon the cross-section water absorptivity and water repellency required in the field of use of the leather-like sheet material.

Further, in the process for the production of a leather-like sheet material, provided by the present invention, preferably, the above treatment solution for the wet coagulation contains a surfactant. Further, the surfactant preferably has an HLB value (Hydrophile-Lipophile Balance) of 4 to 18. When such a surfactant is used, the junction state between the fiber constituting the fiber aggregate and the impregnated elastic polymer is adjusted to control the flexibility, and the degree of micro-porosity of the elastic polymer is adjusted to form a finely porous elastic polymer, whereby a flexible leather-like sheet material can be obtained.

The surfactant that is preferred in the present invention is a surfactant whose hydrophobic segment is formed of an alkylene oxide having 3 or more carbon atoms, polydimethylpolysiloxane, polyphenylmethylpolysiloxane, an alkyl group or an aralkyl group and whose hydrophilic group is polyoxyethylene. In the surfactant, further, the HLB value (Hydrophile-Lipophile Balance) calculated on the basis of the following equation is preferably 4 to 18, most preferably 10 to 15.

$$\text{HLB value} = 7 + 11.7 \log(Mw/Mo)$$

Mw: Molecular weight of hydrophilic group portion
Mo: Molecular weight of hydrophobic group portion

In the production process of the present invention, further, it is preferred to use a hydrophobic surfactant in combination as an adjusting agent for making the elastic polymer finely porous. The hydrophobic surfactant is a surfactant whose hydrophobic segment is formed of an alkylene oxide having 3 or more carbon atoms, polydimethylpolysiloxane, polyphenylmethylpolysiloxane or a polyolefin and whose hydrophilic group is polyoxyethylene. In the surfactant, further, the HLB value on the basis of the above equation is preferably less than 4, preferably 3 or less. Specific examples thereof include polydimethylpolysiloxane, polyphenylmethyl polysiloxane, polybutene, liquid paraffin and sorbitan di- or trialkylate.

It is required to determine the amount of the above surfactant depending upon the field of use of the leather-like sheet material and properties required thereof. As a general range in the present invention, the amount of the surfactant to be added based on the elastic polymer is preferably 0.1 to 10 % by weight. When the above amount is less than 0.1 % by weight, the effect is small. When it is 10 % by weight or more, troubles caused by the addition of an excess amount thereof tend to take place.

The leather-like sheet material containing the modified urethane compound (water repellent) of the present invention has high water repellency even when the above surfactant is used in combination, and particularly, the cross-section water absorptivity thereof is small, and the water repellency thereof does not change with the passage of time. In contrast, when a conventional water repellent is used, the water repellency is not sufficient even if a surfactant is used in combination. Even if the water repellency is exhibited to some extent immediately after the treatment for water repellency is carried out, the water repellency decreases with the passage of time. The reason therefor is not clear. However, it is assumed that the modified urethane compound (water repellent) of the present invention does not easily undergo crystallization, which, as a result, accomplishes a high degree of coating of the surface of the elastic polymer used in the leather-like sheet material with the perfluoroalkyl group of the modified urethane compound.

In the process for the production of a leather-like sheet material, provided by the present invention, the fiber aggregate is impregnated and/or coated with the above treatment solution, and then the treatment solution is coagulated. The coagulation method is preferably a wet coagulation method for improving the feel, and the wet coagulation is carried out in a manner in which the fiber aggregate containing the treatment solution containing the elastic polymer as a main component is immersed in water. Then, the solvent is removed, and the sheet material is dried to be produced for the leather-like sheet material.

When the modified urethane compound of the present invention is a water repellent in which a polyoxyethylene segment is contained in the polyol, the water repellent is dispersed in water, and the dispersion can be used to produce the leather-like sheet material. For example, when a water-based elastic polymer is used, the modified urethane compound is used during the impregnation. Whether the elastic polymer is solvent-based or water-based, the sheet material formed of the fiber and the elastic polymer is prepared and then imparted with the modified urethane compound of the present invention, and the sheet material is dried, whereby the leather-like sheet material can be produced.

In the leather-like sheet material of the present invention, further, a finish process of applying a polyurethane resin coating composition to the porous coating surface is carried out to form a grained artificial leather, or the impregnation base material or the porous coating surface is polished with a sand paper, whereby an artificial leather having a suede-like appearance can be formed.

Examples

The present invention will be further explained with reference to Examples, while the present invention shall not be limited by these Examples. In Examples, percent (%) stands for weight %, and a ratio stands for a weight ratio, unless otherwise specified. Measurement values in Examples were obtained according to the following methods.

(1) Cross-section water absorptivity (mm/24 hr)
A test piece having a width of 2.5 cm and a length of 25 cm was sampled from a leather-like sheet material and measured for a cross-section water absorptivity by the following method. First, the test piece is marked with a line in a position 2 cm away from one end of the test piece. Water containing a small amount of a water-soluble dye is prepared in a vat, one end of the test piece is placed in the water such that the water surface and the marked line are at the same level, and the test piece is vertically fixed. The vat with the test piece fixed in it was maintained at a room at a temperature of $23 \pm 1°C$ for 24 hours, then, the test piece was measured for a height of water absorbed by the test piece, and the height was used as a cross-section water absorptivity. For studying a change with the passage of time, the above measurement was carried out immediately after the sample was prepared, and the measurement was also carried out one week and four weeks after the preparation of the sample. Data obtained four weeks after the preparation was used as a cross-section water absorptivity of an end product.

(2) Water repellency degree
Measured according to JIS-L-1092. After the test by the method according to JIS-L-1092 was carried out, a water-adhering area that was entirely wet was taken as a water repellency degree 0, an area that entirely repelled water and had no adhering water was taken as a water repellency degree 100, and a value of 0 to 100 obtained by evaluation depending upon an area was used as a water repellency degree. For studying a change with the passage of time, further, the above measurement was carried out immediately after the sample was prepared, and the measurement was also carried out one week and four weeks after the preparation of the sample. Data obtained four weeks after the preparation was used as a water repellency degree of an end product.

(3) Opacification temperature (°C) of water repellent solution
A solution of a modified urethane compound (water repellent) having a solid concentration of 60 % in an organic solvent was once temperature-increased to 70°C and then gradually cooled, and a measurement was made for a temperature at which the solution opacified.

(4) Flexural hardness
A test piece having a length of 9 cm in the roll direction and a width of 2.5 cm was sampled. The test piece was marked with a line in positions 2 cm away from both ends of the test piece. The test piece was gripped with a clamp in a position 2 cm away from one end and pressed in a position 2 cm away from the other end, and the test piece was flexed up to a curvature of 2 cm, when the test piece was measured for a repulsive force with a strain gage. The repulsive force was converted to a value per cm of the test piece width.

Example 1 (Water repellent (1))

A diol mixture containing diethylene glycol and 2,2-dimethyl-1,3-propanediol in a molar ratio of 9:1 and adipic acid were reacted to obtain a dihydric polyol having an average molecular weight of 420. As an isocyanate, a trifunctional isocyanate having a molecular weight of 656 was provided, which was an adduct of 1 mol of trimethylolpropane and 3 mol of tolylene diisocyanate (Coronate™ L, supplied by Nippon Polyurethane, NCO % = 13.2 % solid content 75 %). 210 Parts of the above dihydric polyol and 962 parts of the above trifunctional isocyanate were reacted to prepare a prepolymer having a terminal isocyanate group, and the prepolymer was dissolved in a dimethylformamide (DMF):methyl ethyl ketone (MEK) = 90:10 solvent mixture. Then, the above prepolymer and 928 parts of perfluorooctyl-hydroxy-ethane ($C_8F_{17}$-$CH_2CH_2OH$) were reacted to give a solution of 60 % of a fluorine-containing side-chain-modified urethane compound of which the terminal isocyanate group was blocked with the above fluorine compound.

The above fluorine-containing side-chain-modified urethane compound as a water repellent had an average molecular weight of 3,590, and it was a compound in which four fluorine-containing side chains having a molecular weight of 419 ($C_8F_{17}$) each were bonded to a urethane-bond-containing compound having an average molecular weight of 1,910. Further, the fluorine-containing side-chain-modified urethane compound had a fluorine content of 36 % by weight, the number of urethane bonds per molecule was 12, and the number of urethane bonds per a molecular weight of 1,000 was 3.3. Further, it had an opacification temperature of 5°C or lower, and it had good stability in the form of a solution.

Example 2 (Water repellent (2))

A solution of 60 % of a fluorine-containing side-chain-modified urethane compound whose terminal isocyanate group was blocked with a fluorine compound was obtained by carrying out a reaction in the same manner as in Example 1 except that the isocyanate in Example 1 was replaced with a trifunctional isocyanate which was an adduct of 1 mol of trimethylolpropane and 3 mol of hexamethylene diisocyanate (Coronate™ HL, supplied by Nippon Polyurethane, NCO % = 12.8 %, solid content 75 %) and that the amount of the trifunctional isocyanate was changed from 962 parts to 983 parts.

The above fluorine-containing side-chain-modified urethane compound as a water repellent had an average molecular weight of 3,570, and it was a compound in which four fluorine-containing side chains having a molecular weight of 419 ($C_8F_{17}$) each were bonded to a urethane-bond-containing compound having an average molecular weight of 1,890. Further, the fluorine-containing side-chain-modified urethane compound had a fluorine content of 36 %, the number of urethane bonds per molecule was 12, and the number of urethane bonds per a molecular weight of 1, 000 was 3.4. Further, it had an opacification temperature of 5°C or lower, and it had good stability in the form of a solution.

Example 3 (Water repellent (3))

Propylene oxide was added in the presence of trimethylolpropane as an initiator, to give a polyol having a hydroxyl value of 175 mgKOH/g. The polyol contained, as a main component, a trihydric polyol having a molecular weight of 961. As an isocyanate, tolylene diisocyanate was provided, which was a difunctional isocyanate having a molecular weight of 173. 480 Parts of the above polyol and 266 parts of the above difunctional isocyanate were reacted to prepare a prepolymer having a terminal isocyanate group, and the prepolymer was dissolved in dimethylformamide (DMF):methyl ethyl ketone (MEK) = 90:10 solvent mixture. Then, the above prepolymer and 696 parts of perfluorooctyl-hydroxy-ethane ($C_8F_{17}$-$CH_2CH_2OH$) were reacted to give a solution of 60 % of a fluorine-containing side-chain-modified urethane compound of which the terminal isocyanate group was blocked with the fluorine compound.

The above fluorine-containing side-chain-modified urethane compound as a water repellent had an average molecular weight of 2,875, and it was a compound in which three fluorine-containing side chains having a molecular weight of 419 ($C_8F_{17}$) each were bonded to a urethane-bond-containing compound having an average molecular weight of 1,618. Further, the fluorine-containing side-chain-modified urethane compound had a fluorine content of 33 %, the number of urethane bonds per molecule was 6, and the number of urethane bonds per a molecular weight of 1,000 was 2.1. Further, it had an opacification temperature of 5°C or lower, and it had good stability in the form of a solution.

Example 4 (Water repellent (4))

A solution of 60 % of a fluorine-containing side-chain-modified urethane compound whose terminal isocyanate group was blocked with a fluorine compound was obtained by carrying out a reaction in the same manner as in Example 1 except that 928 parts of the perfluorooctyl-hydroxy-ethane ($C_8F_{17}$-$CH_2CH_2OH$) was replace with 1,384 parts of per-fluorolauryl-hydroxy-butane ($C_{12}F_{25}$-$CH_2CH_2CH_2CH_2OH$).

The above fluorine-containing side-chain-modified urethane compound as a water repellent had an average molecular weight of 4,500, and it was a compound in which four fluorine-containing side chains having a molecular weight of 619 ($C_{12}F_{25}$) each were bonded to a urethane-bond-containing compound having an average molecular weight of 2,020. Further, the fluorine-containing side-chain-modified urethane compound had a fluorine content of 42 %, the number of urethane bonds per molecule was 12, and the number of urethane bonds per a molecular weight of 1,000 was 2.7. Further, it had an opacification temperature of 5°C or lower, and it had good stability in the form of a solution.

Example 5 (Water repellent (5))

A solution of 60 % of a fluorine-containing side-chain-modified urethane compound whose terminal isocyanate group was blocked with a fluorine compound was obtained by carrying out a reaction in the same manner as in Example 1 except that 928 parts of the perfluorooctyl-hydroxy-ethane ($C_8F_{17}$-$CH_2CH_2OH$) was replaced with 1,728 parts of perfluorodecyl-hydroxy-ethane ($C_{16}F_{33}$-$CH_2CH_2OH$)

The above fluorine-containing side-chain-modified urethane compound as a water repellent had an average molecular weight of 5,190, and it was a compound in which four fluorine-containing side chains having a molecular weight of 819 ($C_{16}F_{33}$) each were bonded to a urethane-bond-containing compound having an average molecular weight of 1,910. Further, the fluorine-containing side-chain-modified urethane compound had a fluorine content of 48 %, the number of urethane bonds per molecule was 12, and the number of urethane bonds per a molecular weight of 1,000 was 2.3. Further, it had an opacification temperature of 5°C or lower, and it had good stability in the form of a solution.

Comparative Example 1 (Conventional water repellent)

250 Parts of polyethylene adipate that was a dihydric polyol having a molecular weight 500 and 174 parts of tolylene diisocyanate that was a difunctional isocyanate having a molecular weight of 173 were reacted to prepare a prepolymer having a terminal isocyanate group, and the prepolymer was dissolved in a dimethylformamide (DMF) methyl ethyl ketone (MEK) = 90:10 solvent mixture. Then, the prepolymer and 464 parts of perfluorooctyl-hydroxy-ethane ($C_8F_{17}$-$CH_2CH_2OH$) were reacted to give a solution of 60 % of a urethane compound of which the terminal isocyanate group was blocked with the fluorine compound.

The above urethane compound had a terminal to which two fluorine-containing side chains having a molecular weight of 419 ($C_6F_{17}$) were bonded, and the number of urethane bonds per molecule was 2. The urethane compound had an opacification temperature of 28°C and had insufficient stability at room temperature in the form of a solution.

Example 6

(Preparation of fiber aggregate (A))

A fiber obtained by mixing 70 % of a polyester fiber (0.9 dtex (0.8 denier), fiber length 51 mm) that exhibited a shrinkability of 50 % in warm water at 70°C and 30 % of a polyester fiber (0.9 dtex (0.8 denier), fiber length 51 mm) that exhibited no shrinkability in warm water at 70° C was formed into a web with a carding machine, a cross wrapper and a needle locker. Then, the web was immersed in warm water having a temperature of 70°C for 3 minutes to shrink it to an area that was 58 % of the original area of the web. Further, the shrunken web was passed between a stainless steel net belt and a hot cylinder at 140° C to prepare a fiber aggregate (A) having a weight of 330 g/m$^2$, a thickness of 1.0 mm and an apparent density of 0.33 g/cm$^3$.

(Preparation of leather-like sheet material)

A polyol mixture containing polytetramethylene glycol (Mw 2,020) and polybutylene adipate (Mw 1,980) in a molar ratio of 60:40, diphenylmethane diisocyanate and ethylene glycol were reacted to give a polyurethane resin having a 100 % elongation modulus of 100 kg/cm$^2$.

As treatment solutions, impregnation solutions of three levels (a, b, c) and coating solutions of three levels (d, e, f) shown in Table 1 were prepared from the above polyurethane resin, the water repellent (1) in Example 1 and a surfactant. The above surfactant was polyoxyethylene-modified dimethylpolysiloxane (FG-10: supplied by Matsumoto Yushi-Seiyaku Co., Ltd., hydrophobic group: dimethylpolysiloxane (Mw = 2,240), hydrophilic group: polyethylene oxide (Mw = 1,760), HLB = 5.8).

Table 1

|  | Impregnation solutions | | | Coating solutions | | |
|---|---|---|---|---|---|---|
| Solution name | a | b | b | d | e | f |
| Polyurethane resin concentration | 15% | 15% | 15% | 20% | 20% | 20% |
| Water repellent concentration | 0.15% | 0.30% | 0.45% | 0.20% | 0.40% | 0.60% |
| Water repellent/polyurethane resin | 1.0% | 2.0% | 3.0% | 1.0% | 2.0% | 3.0% |
| Surfactant concentration | 0.15% | 0.15% | 0.15% | 0.20% | 0.20% | 0.20% |
| Surfactant/polyurethane resin | 1.0% | 1.0% | 1.0% | 1.0% | 1.0% | 1.0% |
| Note: Solution name without surfactant | a' | b' | c' | d' | e' | f' |

The previously prepared fiber aggregate (A) was immersed in, and impregnated with, the impregnation solution and squeezed with a doctor blade to a thickness that was 90 % of the thickness of the base material. Before the recovery of the base material from the compression, the base material was coated with the coating solution, and the coated based material was treated in a coagulation aqueous solution containing 15 % of DMF and having a temperature of 30°C for 15 minutes. The solvent was removed in water, followed by washing and drying.

Each of the thus-obtained sheet materials contained 190 g/m$^2$ of the polyurethane resin in the fiber aggregate, had a surface polyurethane layer of 180 g/m$^2$, and had fine pores formed in the polyurethane resin. Each of these sheet materials (to be referred to as Examples 6-1, 6-2 and 6-3" hereinafter) was measured for cross-section water absorptivity, a surface water repellency degree and a flexural hardness, and Table 2 shows the results.

A urethane coating composition containing titanium oxide as a pigment was applied to these sheet materials with a gravure roll, and a urethane coating composition containing silicon dioxide as a gloss-adjusting agent was further applied, to produce grained artificial leathers. Shoes were prepared from these artificial leathers by using them as upper materials of golfer shoes, and tested by wearing. As a result, the shoes in Example 6-3 were remarkably excellent without infiltration of water into the shoes even in the rain. While the shoes in Example 6-2 slightly had the infiltration of water, they had no practical problem. The shoes in Example 6-1 were not satisfactory as golfer shoes. However, they were sufficient for casual shoes, athletic shoes, play shoes, etc., which were slightly less required to satisfy the requirements with regard to the cross-section water absorptivity.

Example 7

(Preparation of silicon-treated fiber aggregate (B))

A fiber obtained by mixing 70 % of a polyester fiber (0.9 dtex (0.8 denier) fiber length 51 mm) that exhibited a shrinkability of 50 % in warm water at 70°C and 30 % of a polyester fiber (0.9 dtex (0.8 denier), fiber length 51 mm) that exhibited no shrinkability in warm water at 70° C was formed into a web with a carding machine, a cross wrapper and a needle locker. Then, the web was immersed in warm water having a temperature of 70°C for 3 minutes to shrink it to an area that was 58 % of the original area of the web, and the web was subjected to a suction dehydrating machine to attain a water content of 40 %. The web was impregnated with a treatment solution prepared by adding an organic acid zinc as a catalyst to a dispersion of 1 % of methylhydrogenpolysiloxane in water, and squeezed to have a pickup weight of 100 % based on the fiber weight. The web was passed between a stainless steel net belt and a hot cylinder at 140°C to prepare a fiber aggregate (B) having a weight of 330 g/m$^2$, a thickness of 1.0 mm and an apparent density of 0.33 g/cm$^3$.

(Preparation of leather-like sheet material)

Leather-like sheet materials were prepared using the impregnation solutions and the coating solutions in the same manner as in Example 6 except that the fiber aggregate (A) in Example 6 was replaced with the silicon-treated fiber aggregate (B).

Each of the thus-obtained sheet materials contained 190 g/m$^2$ of the polyurethane resin in the fiber aggregate, had a surface polyurethane layer of 180 g/m$^2$, and had fine pores formed in the polyurethane resin. Each of these sheet materials was measured for cross-section water absorptivity, a surface water repellency degree and a flexural hardness, and Table 2 shows the results.

Grained artificial leathers were obtained in the same manner as in Example 6. Shoes were prepared from these artificial leathers by using them as upper materials of golfer shoes, and tested by wearing. As a result, the shoes in Example 7-3 were remarkably excellent without infiltration of water into the shoes even in the rain. While the shoes in Example 7-2 slightly had the infiltration of water, they had no practical problem. The shoes in Example 7-1 were sufficient for casual shoes, athletic shoes, play shoes, etc., which were slightly less required to satisfy the requirements with regard to the cross-section water absorptivity. However, they were not satisfactory as golfer shoes. Further, the shoes in Example 7 were more flexible than those in Example 6 and were excellent in the feeling of wearing.

Table 2

| | Ex. 6-1 | Ex. 6-2 | Ex. 6-3 | Ex. 7-1 | Ex. 7-2 | Ex. 7-3 |
|---|---|---|---|---|---|---|
| Fiber aggregate used | (A) | (A) | (A) | (B) | (B) | (B) |
| Water repellent used | (1) | (1) | (1) | (1) | (1) | (1) |
| Impregnation solution | a | b | c | a | b | c |
| Coating solution | d | e | f | d | e | f |
| Cross-section water absorptivity mm/24hr (Immediately after preparation) (After 1 week) (After 4 weeks) | 20 20 25 | 4 5 6 | 0 0 0 | 18 20 20 | 3 5 5 | 0 0 0 |
| Water repellency degree % (Immediately after preparation) (After 1 week) (After 4 weeks) | 95 95 90 | 100 100 95 | 100 100 100 | 95 95 90 | 100 100 95 | 100 100 100 |
| Flexural hardness g/cm Immediately after preparation | 2.8 | 2.9 | 3.0 | 1.9 | 2.0 | 2.1 |
| Ex. = Example | | | | | | |

Example 8

A leather-like sheet material and an artificial leather were prepared under the same conditions as those in Example 6-2 except that the water repellent (1) of Example 1 used in Example 6 was replaced with the water-repellent (2) synthesized in Example 2. The impregnation solution (b) and the coating solution (e) were used as such.

Further, a leather-like sheet material and an artificial leather were prepared under the same conditions as those in Example 6-2 except that the above replacement with the water repellent was carried out and further that the fiber aggregate (A) was replaced with the silicon-treated fiber aggregate (B).

These leather-like sheet materials exhibited a cross-section water absorptivity of 0 mm/24 hr and had a surface water repellency degree of 100, and these values remained without any change even after 4 weeks, so that they were excellent in resistance against water absorption.

Examples 9 to 12

Leather-like sheet materials and artificial leathers were prepared under the same conditions as those in Example 6-2 except that the water-repellent (1) of Example 1 used in Example 6 was replaced with the water repellents (4) and (5) synthesized in Examples 4 and 5. The impregnation solution (b) and the coating solution (e) were used as such.

In Examples 11 and 12, further, leather-like sheet materials and artificial leathers were prepared under the same conditions as those in Example 6-2 except that the above replacement with the water repellent was carried out and further that the fiber aggregate (A) was replaced with the silicon-treated fiber aggregate (B).

While these leather-like sheet materials were excellent in resistance against water absorption, the water absorptivity tends to decrease slightly when the number of carbon atoms of the perfluoroalkyl increases to excess. However, they were suitable for the object of the present invention. Table 3 shows the results.

Examples 13 and 14

Leather-like sheet materials and artificial leathers were prepared under the same conditions as those in Example 6-2 except that the surfactant used in Example 6 was not used. The impregnation solution (b') and the coating solution (e') were used as such.

Further, in Example 14, a leather-like sheet material and an artificial leather were prepared under the same conditions as those in Example 6-2 except that the surfactant was not used and that the fiber aggregate (A) was replaced with the silicon-treated fiber aggregate (B).

While the materials and leathers obtained without the surfactant were excellent in resistance to water absorption, they were slightly hard in feeling. Table 3 also shows the physical properties

Table 3

| | Ex. 9 | Ex. 10 | Ex. 11 | Ex. 12 | Ex. 13 | Ex. 14 |
|---|---|---|---|---|---|---|
| Fiber aggregate used | (A) | (A) | (B) | (B) | (A) | (B) |
| Water repellent used | (4) | (5) | (4) | (5) | (1) | (1) |
| Impregnation solution | b | b | b | b | b' | b' |
| Coating solution | e | e | e | e | e' | e' |
| Cross-section water absorptivity mm/24hr<br>(Immediately after preparation)<br>(After 1 week)<br>(After 4 weeks) | 0<br>1<br>2 | 0<br>3<br>4 | 0<br>1<br>2 | 0<br>3<br>4 | 2<br>-<br>4 | 2<br>-<br>4 |
| Water repellency degree %<br>(Immediately after preparation)<br>(After 1 week)<br>(After 4 weeks) | 100<br>100<br>95 | 100<br>100<br>95 | <br>100<br>95 | 100<br>100<br>95 | 100<br>-<br>95 | 100<br>-<br>95 |
| Flexural hardness g/cm<br>Immediately after preparation | 3.0 | 3.0 | 2.0 | 2.0 | 4.2 | 3.0 |
| Remarks | | | | | No surfactant | No surfactant |
| Ex. = Example | | | | | | |

Comparative Example 2

Impregnation solutions of three levels (a, b, c) and coating solutions of three levels (d, e, f) were prepared as treatment solutions in the same manner as in Example 6 except that the water-repellent (1) of Example 1 used in Example 6 was replaced with the conventional water repellent synthesized in Comparative Example 1. Leather-like sheet materials and artificial leathers were prepared under the same conditions as those in Example 6 except for the above.

These leather-like sheet materials were measured for a cross-section water absorptivity and a surface water repellency degree. Table 4 shows the results.

When used in combination with the surfactant, the conventional water repellent of Comparative Example 1 came to be poor in water repellency with the passage of time after the preparation of the leather-like sheet materials, and it was degraded with regard to the cross-section water absorptivity and the surface water repellency degree.

Further, shoes were prepared from these artificial leathers by using them as upper materials of golfer shoes, and tested by wearing. As a result, the shoes suffered infiltration of water into the shoes in the rain and were insufficient as golfer shoes.

Comparative Example 3

A leather-like sheet material and an artificial leather were prepared under the same conditions as those in Example 6-2 except that the water-repellent (1) used in Example 6-2 was not used. The impregnation solution (b) and the coating solution (e) were used as such.

The obtained sheet exhibited a cross-section water absorptivity of 200 mm or more/8 hr and had a surface water absorptivity of 10 %, and they were entirely insufficient for the water absorption resistance of a leather-like sheet.

Example 15

(Preparation of silicon-treated fiber aggregate (C))

A fiber obtained by mixing 50% of a polyester fiber (0.9dtex (0.8 denier), fiber length 51 mm) that exhibited a shrinkability of 50 % in warm water at 70° C and 50 % of a nylon-6 fiber (1.3dtex (1.2 denier), fiber length 51 mm) that exhibited no shrinkability in warm water at 70°C was formed into a web with a carding machine, a cross wrapper and a needle looker. Then, the web was immersed in warm water having a temperature of 70° C for 3 minutes to shrink it to an area that was 70 % of the original area of the web, and the web was subjected to a suction dehydrating machine to attain a water content of 40 %. Then, the web was impregnated with a treatment solution prepared by adding an organic acid zinc as a catalyst to a dispersion of 1% of methylhydrogenpolysiloxane in water, and squeezed to have a pickup weight of 100 % based on the fiber weight. The web was passed between a stainless steel net belt and a hot cylinder at 140°C to prepare a fiber aggregate (C) having a weight of 330 g/m$^2$, a thickness of 1.0 mm and an apparent density of 0.26 g/cm$^3$.

(Preparation of leather-like sheet material)

Leather-like sheet materials and artificial leathers were prepared in the same manner as in Example 6 except that the fiber aggregate (A) in Example 6 was replaced with the silicon-treated fiber aggregate (C).

Each of the thus-obtained sheet materials contained 230 g/m$^2$ of the polyurethane resin in the fiber aggregate, had a surface polyurethane layer of 180 g/m$^3$, and had fine pores formed in the polyurethane resin. Each of these sheet materials was measured for cross-section water absorptivity, a surface water repellency degree and a flexural hardness, and Table 4 shows the results.

Like Example 6, shoes were prepared from these artificial leathers by using them as upper materials of golfer shoes, and tested by wearing. As a result, the shoes in Example 15-3 were remarkably excellent without infiltration of water into the shoes even in the rain. While the shoes in Example 15-2 slightly had the infiltration of water, they had no practical problem. The shoes in Example 15-1 were not satisfactory as golfer shoes. However, they were sufficient for casual shoes, athletic shoes, play shoes, etc., which were slightly less required to satisfy the requirements with regard to the cross-section water absorptivity.

Table 4

| | C.Ex. 2-1 | C.Ex. 2-2 | C.Ex. 2-3 | Ex. 15-1 | Ex. 15-2 | Ex. 15-3 |
|---|---|---|---|---|---|---|
| Fiber aggregate used | (A) | (A) | (A) | (C) | (C) | (C) |
| Water repellent used | Conventional method | Conventional method | Conventional method | (1) | (1) | (1) |
| Impregnation solution | a | b | c | a | b | c |
| Coating solution | d | e | f | d | e | f |
| Water repellent/ polyurethane resin Impregnated layer | 1.0% | 2.0% | 3.0% | 1.0% | 2.0% | 3.0% |
| Coating layer | 1.0% | 2.0% | 3.0% | 1.0%. | 2.0% | 3.0% |
| Cross-section water absorptivity mn/24hr (Immediately after preparation) | 50 | 20 | 5 | 25 | 8 | 0 |
| (After 1 week) | 80 | 50 | 30 | 28 | 10 | 2 |

(continued)

| | | | | | | |
|---|---|---|---|---|---|---|
| Cross-section water absorptivity mn/24hr (After 4 weeks) | 140 | 90 | 70 | 30 | 12 | 3 |
| Water repellency degree % (Immediately after preparation) (After 1 week) (After 4 weeks) | 95 80 70 | 100 90 80 | 100 95 90 | 95 95 90 | 100 100 95 | 100 100 100 |
| Flexural hardness g/cm (Immediately after preparation) | 2.9 | 3.0 | 3.1 | 1.8 | 1.8 | 1.9 |
| Remarks | | | | | | |
| C.Ex. = Comparative Example Ex. = Example | | | | | | |

Comparative Examples 4 and 5

Impregnation solutions of three levels and coating solutions of three levels were prepared as treatment solutions in the same manner as in Example 6 except that the water-repellent (1) of Example 1 used in Example 6 was replaced with the conventional water repellent synthesized in Comparative Example 1 and the surfactant used in Example 6 was not used. Leather-like sheet materials and artificial leathers were prepared under the same conditions as those in Example 6 except for the above.

Further, leather-like sheet materials and artificial leathers were prepared under the same conditions as the above except that the water repellent was changed and that the fiber aggregate (A) was replaced with the silicon-treated fiber aggregate (B).

Table 5 also shows physical properties.

Table 5

| | C.Ex. 4-1 | C.Ex. 4-2 | C.Ex. 4-3 | C.Ex. 5-1 | C.Ex. 5-2 | C.Ex. 5-3 |
|---|---|---|---|---|---|---|
| Fiber aggregate used | (A) | (A) | (A) | (B) | (B) | (B) |
| Water repellent used | Conventional method | Conventional method | Conventional method | Conventional method | Conventional method | Conventional method |
| Impregnation solution | a' | b' | c' | a' | b' | c' |
| Coating solution | d' | e' | f' | d' | e' | f' |
| Water repellent/ polyurethane resin | 1.0% | 2.0% | 3.0% | 1.0% | 2.0% | 3.0% |
| Impregnated layer Coating layer | 1.0% | 2.0% | 3.0% | 1.0% | 2.0%. | 3.0% |

(continued)

| | | | | | | |
|---|---|---|---|---|---|---|
| Cross-section water absorptivity mn/24hr (Immediately after preparation) | 45 | 15 | 4 | 35 | 10 | 1 |
| (After 1 week) | 75 | 45 | 25 | 65 | 40 | 20 |
| (After 4 weeks) | 130 | 90 | 65 | 120 | 80 | 50 |
| Flexural hardness | | | | | | |
| (Immediately after preparation) | 4.1 | 4.2 | 4.2 | 2.9 | 3.0 | 3.0 |
| Remarks | No surfactant | No surfactant | No surfactant | No surfactant | No surfactant | No surfactant |
| C.Ex. = Comparative Example | | | | | | |

Example 16 (Water repellent (6))

420 Parts of polyethylene glycol having a molecular weight of 1,050 and 95 parts of polytetramethylene glycol having a molecular weight of 950 were provided as a dihydric polyol, and Coronate™L (supplied by Nippon Polyurethane, NCO % = 13.2 %, solid content 75 %, adduct of 1 mol of trimethylolpropane and 3 mol of tolylene diisocyanate) having a molecular weight of 656 was provided as a trifunctional isocyanate. These components were reacted to prepare a prepolymer having a terminal isocyanate group, and the prepolymer was dissolved in acetone. Then, the prepolymer and 928 parts of perfluorooctyl-hydroxy-ethane ($C_8F_{17}$-$CH_2CH_2OR$) were reacted to give a solution of 20 % of a fluorine-containing side-chain-modified urethane compound, of which the terminal isocyanate group was blocked with the fluorine compound, in an organic solvent. Then, the solution was stirred with a homogenizer, and while the temperature inside was adjusted to 30° C $\pm$ 2° C, 12,025 parts of water was added, to prepare a dispersion mixture. While the dispersion mixture was adjusted such that it did not have a temperature of 40° C or higher, acetone was removed by distillation under vacuum, to prepare a dispersion of 20 % of the fluorine-containing side-chain-modified urethane compound in water.

The above fluorine-containing side-chain-modified urethane compound as a water repellent had an average molecular weight of 4,200, and it was a compound in which four fluorine-containing side chains having a molecular weight of 419 ($C_8F_{17}$) each were bonded to a urethane-bond-containing compound having an average molecular weight of 2,520. Further, the fluorine-containing side-chain-modified urethane compound had a fluorine content of 31 %, the number of urethane bonds per molecule was 12, and the number of urethane bonds per a molecular weight of 1,000 was 2.9. Further, it had the form of opaque emulsion and was stable at room temperature.

Example 17

(Preparation of leather-like sheet material)

Chips of nylon-6 and a low-density polyethylene were blended in an amount ratio of 50:50, and a fiber was spun therefrom at 285° C to give a "sea-islands" type blended fiber in which nylon-6 constituted islands. This fiber was spun and drawn, and then it was cut to 51 mm to obtain short fibers of 4.5 denier (5.0 dtex). The short fibers were processed through carding, cross wrapper, needle locker and hot calender processes to prepare a non-woven fabric having a weight of 560 g/m² and a thickness of 1.8 mm.

A polyol mixture containing polytetramethylene glycol (Mw 2,020) and polybutylene adipate (Mw 1,980) in a molar ratio of 60:40, diphenylmethane diisocyanate and ethylene glycol were reacted in dimethylformamide, to prepare a polyurethane resin having a 100 % elongation modulus of 100 kg/cm². A polyoxy-modified dimethylpolysiloxane (FG-10, supplied by Matsumoto Yushi-Seiyaku Co., Ltd.) as a porous agent was added to the above polyurethane resin, to prepare an impregnation solution having a solid content of 15 %.

The above non-woven fabric was immersed in the impregnation solution, and the immersed non-woven fabric was squeezed coagulated in water to form a sheet. The sheet was placed in a toluene at 95°C to remove the low-density polyethylene constituting the "sea" component of the fiber by extraction, and the toluene was azeotropically removed in hot water at 90°C. The sheet was dried to give a sheet material composed of a fiber aggregate and the polyurethane resin. Further, the sheet material was buffed with a polishing machine, to prepare a sheet having fluffings, and the sheet was dyed in brown with a metallized dye. The thus-obtained sheet material was a nubuck-toned sheet in which 800 very fine fibers having an average dtex of 0.0033 (denier of 0.003) were bundled

The water-dispersible water repellent (6) in Example 16 was diluted to a concentration of 1 %, and the above-obtained sheet material was immersed therein. Then, the immersed sheet material was squeezed to have a pickup amount of 100 % based on the sheet weight and dried, to give a leather-like sheet material that was water-repellency-treated. The thus-obtained material had a flexural hardness of 1.5 g/cm.

The above leather-like sheet material was as soft as a non-treated sheet and excellent in water repellency, and no infiltration of water into the bundled fibers was observed. The cross-section water absorptivity thereof was 2 mm/hr, and the surface water repellency degree thereof was 100 %. Further, the above leather-like sheet material exhibited no change with the passage of time after 4 weeks, the cross-section water absorptivity data thereof immediately after the preparation, after 1 week and after 4 weeks were 0 mm/24 hr, 1 mm/hr and 2 mm/hr, respectively, and the surface water repellency degree data was 100 % each time.

**Claims**

1. A leather-like sheet material comprising a sheet material composed of a fiber aggregate and a polymethane resin the sheet material containing a fluorine-containing side-chain-modified urethane compound which satisfies the following requirements (i) to (iv),

   (i) said urethane compound containing a urethane-bond-containing compound having a molecular weight of 500 to 5,000 and fluorine-containing side chains having a molecular weight of 200 to 1,000 each, 3 to 12 such fluorine-containing side chains bonding to the urethane-bond-containing compound,
   (ii) said urethane compound having a fluorine content of 20 to 60 % by weight as a fluorine atom,
   (iii) said urethane compound having 6 to 36 urethane bonds per molecule, and **characterized by**
   (iv) said methane compound being dispersed in the polymethane resin.

2. The leather-like sheet material of claim 1, wherein said fluorine-containing side-chain-modified urethane compound is present in a manner in which it at least adheres to a surface of the polyurethane resin.

3. The leather-like sheet material of claim 1, wherein said fluorine-containing side-chain-modified urethane compound is contained in an amount of 0.1 to 4 % by weight based on the leather-like sheet material.

4. The leather-like sheet material of claim 1, wherein a fiber constituting said fiber aggregate has a surface to which a silicon compound adheres.

5. The leather-like sheet material of claim 1, wherein said polyurethane resin contains a surfactant.

6. The leather-like sheet material of claim 5, wherein said surfactant has an HLB value of 4 to 18.

7. The leather-like sheet material of claim 1, which has a cross-section water absorptivity of 40 mm/24 hours or less.

8. The leather-like sheet material of claim 1, which has a flexural hardness of 4 g/cm or less.

9. A process for the production of a leather-like sheet material, which comprises impregnating and/or coating a fiber aggregate with a treatment solution containing the fluorine-containing side-chain-modified urethane compound and the polyurethane resin recited in claim 1 and coagulating the polyurethane resin.

10. A process for the production of a leather-like sheet material, which comprises impregnating and/or coating a fiber aggregate with a treatment solution containing a polyurethane resin, coagulating the polyurethane resin, and then impregnating the fiber aggregate with a treatment solution containing the fluorine-containing side-chain-modified urethane compound recited in claim 1.

11. The process for the production of a leather-like sheet material as recited in claim 9 or 10, wherein the coagulation is carried out by a wet coagulation method.

12. The process for the production of a leather-like sheet material as recited in claim 9 or 10, wherein the treatment solution contains a surfactant.

13. The process for the production of a leather-like sheet material as recited in claim 12, wherein the surfactant has an HLB value of 4 to 18.

14. The process for the production of a leather-like sheet material as recited in claim 9 or 10, wherein a fiber constituting the fiber aggregate has a surface to which a silicon compound adheres.

15. Shoes comprising using the leather-like sheet material recited in claim 1.

16. The leather-like material of claim 1, wherein said fluorine-containing side-chain-modified urethane compound is produced by reacting a polyol compound having a molecular weight of 300 to 3,000 with a polyisocyanate compound under conditions where (m + n) $\geq$ 5 is satisfied, in which m is a number of functional groups (number of -OH groups) per molecule of said polyol compound and n is a number of functional groups (number of -NCO groups) per molecule of said polyisocyanate compound, and where the total number of NCO groups is greater then the total number of OH groups, and reacting the thus-obtained urethane-bond-containing compound with a fluorine-containing-side-chain-providing compound of the following formula (1),

$$R_f - R_1 - Q \qquad (1)$$

wherein:

$R_f$ is a fluorine-containing side chain group,
$R_1$ ie an alkylene or oxyalkylene group having 1 to 12 carbon atoms, and
Q is a hydroxyl group, a carboxyl group or an amino group.

17. The leather-like sheetmaterial of claim 16, , wherein the fluorine-containing side chain group ($R_f$) in the fluorine-containing-side-chain-providing compound represented by said formula (1) is a perfluoroalkyl group having 4 to 18 carbon atoms.

18. The leather-like sheet material of claim 16 , wherein the polyisocyanate has a molar amount that is 90 to 110 % of a number obtained by multiplying a molar amount of the polyol by the number (m) of the functional groups of the polyol.

19. The leather-like sheet material of claim 16 , wherein said polyol compound contains at least 40 % by weight of polyoxyethylene units.

**Patentansprüche**

1. Lederartiges flächiges Material, das ein flächiges Material bestehend aus einer Faseransammlung und einem Polyurethanharz aufweist, wobei das flächige Material eine Fluor enthaltende, Seitenketten-modifizierte Urethanverbindung aufweist, die den folgenden Anforderungen (i) bis (iv) entspricht,

(i) die Urethanverbindung enthält eine eine Urethanbindung aufweisende Verbindung, die ein Molekulargewicht von 500 bis 5000 aufweist, und Fluor enthaltende Seitenketten, die jeweils ein Molekulargewicht von 200 bis 1000 aufweisen, 3 bis 12 solcher Fluor enthaltenden Seitenketten binden an die die Urethanbindung enthaltende Verbindung,
(ii) die Urethanverbindung weist einen Fluorgehalt von 20 bis 60 Gew.% als Fluoratome auf,
(iii) die Urethanverbindung weist 6 bis 36 Urethanbindungen pro Molekül auf, und ist **dadurch gekennzeichnet,**
(iv) **dass** die Urethanverbindung in dem Polyurethanharz dispergiert ist.

2. Lederartiges flächiges Material nach Anspruch 1, worin die Fluor enthaltende, Seitenketten-modifizierte Urethanverbindung in einer Weise vorliegt, in der sie an eine Oberfläche des Polyurethanharzes zumindest anhaftet.

3. Lederartiges flächiges Material nach Anspruch 1, worin die Fluor enthaltende, Seitenketten-modifizierte Urethanverbindung in einer Menge von 0,1 bis 4 Gew.% in Bezug auf das lederartige flächiges Material enthalten ist.

4. Lederartiges flächiges Material nach Anspruch 1, worin eine die Faseransammlung bildende Faser eine Oberfläche aufweist, an die eine Siliziumverbindung anhaftet.

5. Lederartiges flächiges Material nach Anspruch 1, worin das Polyurethanharz ein Tensid beinhaltet.

6. Lederartiges flächiges Material nach Anspruch 5, worin das Tensid einen HLB-Wert von 4 bis 18 aufweist.

7. Lederartiges flächiges Material nach Anspruch 1, das einen Querschnittswasserabsorptionsgrad von 40 mm/24 Stunden oder weniger aufweist.

8. Lederartiges flächiges Material nach Anspruch 1, das eine Biegehärte von 4 g/cm oder weniger aufweist.

9. Verfahren zur Herstellung eines lederartigen flächigen Materials, das Folgendes beinhaltet, nämlich das Imprägnieren und/oder das Beschichten einer Faseransammlung mit einer Behandlungslösung, die die Fluor enthaltende, Seitenketten-modifizierte Urethanverbindung und das in Anspruch 1 erwähnte Polyurethanharz enthält, und das Koagulieren des Polyurethanharzes.

10. Verfahren zur Herstellung eines lederartigen flächigen Materials, das Folgendes beinhaltet, nämlich das Imprägnieren und/oder das Beschichten einer Faseransammlung mit einer Behandlungslösung, die ein Polyurethanharz enthält, das Koagulieren des Polyurethanharzes und dann das Imprägnieren der Faseransammlung mit einer Behandlungslösung, die die in Anspruch 1 erwähnte, Fluor enthaltende, Seitenketten-modifizierte Urethanverbindung enthält.

11. Verfahren zur Herstellung eines lederartigen flächigen Materials nach Anspruch 9 oder 10, worin das Koagulieren durch ein nasses Koagulierungsverfahren durchgeführt wird.

12. Verfahren zur Herstellung eines lederartigen flächigen Materials nach Anspruch 9 oder 10, worin die Behandlungslösung ein Tensid enthält.

13. Verfahren zur Herstellung eines lederartigen flächigen Materials nach Anspruch 12, worin das Tensid einen HLB-Wert von 4 bis 18 aufweist.

14. Verfahren zur Herstellung eines lederartigen flächigen Materials nach Anspruch 9 oder 10, worin eine die Faseransammlung bildende Faser eine Oberfläche aufweist, an die eine Siliziumverbindung anhaftet.

15. Schuhe, bei denen das in Anspruch 1 erwähnte, lederartige, flächige Material verwendet ist.

16. Lederartiges flächiges Material nach Anspruch 1, worin die Fluor enthaltende, Seitenketten-modifizierte Urethanverbindung durch Reagieren einer Polyolverbindung, die ein Molekulargewicht von 300 bis 3000 aufweist, mit einer Polyisocyanatverbing unter den Bedingungen $(m + n) \geq 5$, wobei $m$ eine Anzahl funktioneller Gruppen (Anzahl von -OH-Gruppen) pro Molekül der Polyolverbindung und $n$ eine Anzahl von funktionellen Gruppen (Anzahl von -NCO-Gruppen) pro Molekül der Polyisocyanatverbindung ist und wo die Gesamtanzahl der NCO-Gruppen größer als die Gesamtanzahl der OH-Gruppen ist, und durch Reagieren der so erhaltenen, eine Urethanbindung enthaltenden Verbindung mit einer Fluor enthaltenden, Seitenketten liefernden Verbindung der folgenden Formel (1) hergestellt wird,

$$R_f - R_1 - Q \qquad (1)$$

worin:

$R_f$ eine Fluor enthaltende Seitenkettengruppe ist,
$R_1$ eine Alken- oder Oxyalkengruppe mit 1 bis 12 Kohlenstoffatomen ist, und
Q eine Hydroxygruppe, eine Carboxylgruppe oder eine Aminogruppe ist.

17. Lederartiges flächiges Material nach Anspruch 16, worin die Fluor enthaltende Seitenkettengruppe ($R_f$) in der Fluor enthaltenden, Seitenketten liefernden Verbindung, dargestellt durch Formel (1), eine Perfluoralkylgruppe mit 4 bis 18 Kohlenstoffatomen ist.

**18.** Lederartiges flächiges Material nach Anspruch 16, worin das Polyisocyanat eine molare Menge von 90 bis 110 % einer Zahl aufweist, die durch Multiplikation einer molaren Menge des Polyols mit der Anzahl (m) der funktionellen Gruppen des Polyols erhalten wird.

**19.** Lederartiges flächiges Material nach Anspruch 16, worin die Polyolverbindung zumindest 40 Gew.% an Polyoxyethyleneinheiten enthält.

**Revendications**

**1.** Matériau en feuille semblable au cuir comprenant un matériau en feuille composé d'un agrégat de fibres et d'une résine de polyuréthane, le matériau en feuille contenant un composé uréthane modifié à chaîne latérale contenant du fluor qui satisfait les conditions requises suivantes (i) à (iv),

(i) ledit composé uréthane contenant un composé contenant une liaison uréthane, ayant une masse moléculaire de 500 à 5000, et des chaînes latérales contenant du fluor, ayant une masse moléculaire de 200 à 1000 chacune, 3 à 12 de ces chaînes latérales contenant du fluor se liant au composé contenant la liaison uréthane,
(ii) ledit composé uréthane ayant une teneur en fluor de 20 à 60 % en poids sous forme d'atome de fluor,
(iii) ledit composé uréthane ayant 6 à 36 liaisons uréthane par molécule, et **caractérisé en ce que**
(iv) ledit composé uréthane est dispersé dans la résine de polyuréthane.

**2.** Matériau en feuille semblable au cuir selon la revendication 1, dans lequel ledit composé uréthane modifié à chaîne latérale contenant du fluor est présent, de sorte qu'il adhère au moins à une surface de la résine de polyuréthane.

**3.** Matériau en feuille semblable au cuir selon la revendication 1, dans lequel ledit composé uréthane modifié à chaîne latérale contenant du fluor est contenu dans une quantité de 0,1 à 4 % en poids, sur la base du matériau en feuille semblable au cuir.

**4.** Matériau en feuille semblable au cuir selon la revendication 1, dans lequel une fibre constituant ledit agrégat de fibres présente une surface à laquelle adhère un composé de silicium.

**5.** Matériau en feuille semblable au cuir selon la revendication 1, dans lequel ladite résine de polyuréthane contient un tensioactif.

**6.** Matériau en feuille semblable au cuir selon la revendication 5, dans lequel ledit tensioactif a une valeur HLB de 4 à 18.

**7.** Matériau en feuille semblable au cuir selon la revendication 1, qui a une absorptivité de l'eau en section transversale de 40 mm/24 heures ou moins.

**8.** Matériau en feuille semblable au cuir selon la revendication 1, qui présente une dureté à la flexion de 4 g/cm ou moins.

**9.** Procédé pour la production d'un matériau en feuille semblable au cuir qui comprend l'imprégnation et/ou le revêtement d'un agrégat de fibres avec une solution de traitement, contenant le composé uréthane modifié à chaîne latérale contenant du fluor et la résine de polyuréthane indiqués dans la revendication 1, et la coagulation de ladite résine de polyuréthane.

**10.** Procédé pour la production d'un matériau en feuille semblable au cuir qui comprend l'imprégnation et/ou le revêtement d'un agrégat de fibres avec une solution de traitement, contenant une résine de polyuréthane la coagulation de la résine de polyuréthane et ensuite l'imprégnation de l'agrégat de fibre avec une solution de traitement contenant le composé uréthane modifié à chaîne latérale contenant du fluor, citée dans la revendication 1.

**11.** Procédé pour la production d'un matériau en feuille semblable au cuir selon la revendication 9 ou 10, dans lequel la coagulation est réalisée par une méthode de coagulation humide.

**12.** Procédé pour la production d'un matériau en feuille semblable au cuir selon la revendication 9 ou 10, dans lequel la solution de traitement contient un tensioactif.

**13.** Procédé pour la production d'un matériau en feuille semblable au cuir selon la revendication 12, dans lequel le tensioactif a une valeur HLB de 4 à 18.

**14.** Procédé pour la production d'un matériau en feuille semblable au cuir selon la revendication 9 ou 10, dans lequel une fibre constituant l'agrégat de fibre présente une surface à laquelle adhère un composé de silicium.

**15.** Chaussures comprenant l'utilisation du matériau en feuille semblable au cuir selon la revendication 1.

**16.** Matériau en feuille semblable au cuir selon la revendication 1, dans lequel ledit composé uréthane modifié à chaîne latérale contenant du fluor est produit en faisant réagir un composé de polyol ayant une masse moléculaire de 300 à 3000 avec un composé de polyisocyanate dans des conditions où $(m + n) \geq 5$ est satisfait, dans lequel m est un nombre de groupes fonctionnels (nombre de groupes -OH) par molécule dudit composé de polyol et n est un nombre de groupes fonctionnels (nombre de groupes -NCO) par molécule dudit composé de polyisocyanate, et où le nombre total de groupes NCO est supérieur au nombre total de groupes OH, et en faisant réagir le composé contenant une liaison uréthane ainsi obtenu avec un composé fournissant une chaîne latérale contenant du fluor de la formule suivante (1),

$$R_f - R_1 - Q \qquad (1)$$

dans laquelle :

$R_f$ est un groupe à chaîne latérale contenant du fluor,
$R_l$ est un groupe alcylène ou oxyalcylène ayant 1 à 12 atomes de carbone, et
Q est un groupe hydroxyle, un groupe carboxyle ou un groupe amino.

**17.** Matériau en feuille semblable au cuir, selon la revendication 16, dans lequel le groupe à chaîne latérale contenant du fluor ($R_f$) dans le composé fournissant une chaîne latérale contenant du fluor, représenté par ladite formule (1) est un groupe perfluoroalkyle ayant 4 à 18 atomes de carbone.

**18.** Matériau en feuille semblable au cuir, selon la revendication 16, dans lequel le polyisocyanate a une quantité de moles qui représente 90 à 110 % d'un nombre obtenu en multipliant une quantité de moles du polyol par le nombre (m) de groupes fonctionnels du polyol.

**19.** Matériau en feuille semblable au cuir, selon la revendication 16, dans lequel ledit composé de polyol contient au moins 40 % en poids d'unités de polyoxyéthylène.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60239573 A
- JP 60252780 A
- US 4792354 A
- US 2002041965 A
- JP 7305280 A